(19)

Europäisches
Patentamt

European
Patent Office

Office européen
des brevets

(11) **EP 2 846 521 B1**

(12) **EUROPEAN PATENT SPECIFICATION**

(45) Date of publication and mention
of the grant of the patent:
**14.11.2018 Bulletin 2018/46**

(21) Application number: **12875796.0**

(22) Date of filing: **25.06.2012**

(51) Int Cl.:
**H04M 1/725** *(2006.01)*     **H04M 19/04** *(2006.01)*

(86) International application number:
**PCT/CN2012/077464**

(87) International publication number:
**WO 2013/163844 (07.11.2013 Gazette 2013/45)**

(54) **MESSAGE-STRENGTH-BASED RINGING METHOD, DEVICE AND MOBILE TERMINAL**

AUF NACHRICHTENSTÄRKE BASIERENDES RUFTONVERFAHREN, VORRICHTUNG UND
MOBILES ENDGERÄT

PROCÉDÉ DE SONNERIE BASÉ SUR L'IMPORTANCE DU MESSAGE, DISPOSITIF ET TERMINAL
MOBILE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **04.05.2012  CN 201210136670**

(43) Date of publication of application:
**11.03.2015  Bulletin 2015/11**

(73) Proprietor: **ZTE Corporation
Shenzhen, Guangdong 518057 (CN)**

(72) Inventor: **AN, Changhua
Shenzhen
Guangdong 518057 (CN)**

(74) Representative: **Lavoix
Bayerstrasse 83
80335 München (DE)**

(56) References cited:
**EP-A2- 1 613 028       CN-A- 1 620 080
CN-A- 1 964 540       CN-A- 101 345 964
CN-A- 101 827 164     CN-U- 201 682 539
KR-A- 20070 100 984   US-A1- 2004 242 284
US-A1- 2009 002 127   US-A1- 2009 312 067**

## Description

## TECHNICAL FIELD

The disclosure relates to the field of communications, and in particular to a message-intensity-based ringing method, device and mobile terminal.

## BACKGROUND

For the fast-paced work and life style today, mobile phones and other mobile terminals have become indispensable tools of people. People may efficiently communicate with one another anytime and anywhere by a call, short message or email.

In the practical application, when there is a call, short message or email, a mobile terminal generally notifies a user by message ringtone, and currently, the ringing modes are as follows:

1) Fixed ringtone and volume

This ringing mode has been most widely used in the mobile phones; one type of ringtone and volume is set for one message service in this ringing mode, thus in any case, the ringtone for a message service of the same type is the same for the same contact person, and the ringtone for the message service of the same type is also the same even for a different contact;

2) Ringtone and volume are determined according to external noise

This is an improvement of the first ringing mode, mainly intended to adjust the volume of the ringtone of a mobile phone when needed, the implementation principle of which is that the mobile phone may capture the noise from the current environment and determines the volume thereof by some volume detection modules, then set the volume of the ringing ringtone accordingly, by this way, the ringtone volume may be adjusted; but this mode still has some shortcomings that in a noisy environment, the volume and contents of the ringtone are not changed no matter how many times a contact person called;

3) Ringtone types are divided according to periods of time

This is also an improvement of the first ringing mode, mainly intended to solve the problem that people may have different requirements for ringtone in different occasions during one day. To satisfy such requirements, a day is divided into several periods of time, different ringtone types may be provided in different periods of time, thus ensuring that the ringtone of a message service from the same person is different in different periods of time. However, this mode also has some shortcomings, for example, although the change of ringtone is adapted to different workplaces in a certain work period, the changed ringtone itself is not attached with more information, which results in a mobile phone user incapable of distinguishing and processing relevant message services timely.

It can be seen from the above that for an existing mobile terminal, the ringtone of a message service is completely the same, or the initial volume of the ringtone is set according to the loudness of external noise, or different ringing modes are adopted in a fixed period of time. The ringtone volume and ringtone type may not be set flexibly according to the message intensity corresponding to the contact persons by these ringing modes.

US 2009/002127 discusses methods, apparatuses and computer program products for automatic adjustment of call & message alert levels for missed/rejected calls/messages.

CN1613028 discloses a reminding method for incoming calls and communication terminal thereof.

EP1613028 discloses a log-based ringtone service.

US 2009/0312067 discusses system and method of escalating call alert indications.

KR 2007/0100984 discusses a mobile communication terminal having a ringtone output control function and method thereof.

US 2004/242284 discusses a communication device with history based alerts and method thereof.

## SUMMARY

In view of this, the disclosure is intended to provide a method, device and mobile terminal for message-intensity-based ringing, by which a mobile terminal is enabled to compute the current message intensity of the current contact person, and flexibly set the ringtone type and ringtone volume of the current message service according to the message intensity, thus giving more prompt information through a ringtone, and ensuring better communication.

To this end, the disclosure adopts the following technical solutions.

A message-intensity-based ringing method is provided, as recited in claim 1.

A message-intensity-based ringing device is provided, as recited in claim 4.

A mobile terminal includes the above message-intensity-based ringing device.

The embodiments of the disclosure propose a message-intensity-based ringing method with respect to the limitation of a ringing system. The message intensity refers to the data obtained according to the number of message services within a certain time, and time intervals among recent message services or the like. Higher message intensity means that the corresponding contact person wants to contact the user more eagerly.

The message service here includes voice call, video call, short message, multimedia message, Email or the like. For the computation of the message intensity, the message services may be processed uniformly, that is, all the message services from the same person are uniformly considered as all elements of the message intensity computation at a time, or the message intensity of each message service may also be computed independently. In the embodiments of the disclosure, the message intensity of each message service is computed independently. For the convenience of description, the embodiments of the disclosure, taking a call as an example, describe how to compute the message intensity thereof and adopt different ringtones reasonably. Similar processing is adopted for other message services are similar and not repeated here.

After the message intensity of the current message service is computed, the corresponding ringtone type and ringtone volume may be obtained. The ringtone type is equivalent to coarse tuning of the message intensity, and the ringtone volume is equivalent to fine tuning of the message intensity. The above two ways are combined together to differentiate the intensity of each message reasonably, which enables the user to acquire the current message intensity information only based on the ringtone type and ringtone volume, thus to employ corresponding measures for better processing.

## BRIEF DESCRIPTION OF THE DRAWINGS

Fig. 1 is a flowchart of a message-intensity-based ringing method provided by an embodiment of the disclosure;

Fig. 2 is a structural diagram of a message-intensity-based ringing device provided by an embodiment of the disclosure; and

Fig. 3 is a schematic diagram of a workflow of a ringing way provided by an embodiment of the disclosure.

The object achievement, functional features and excellent results of the disclosure will be further described below in conjunction with specific embodiments and accompanying drawings.

## DETAILED DESCRIPTION

The technical solutions of the disclosure will be further described in detail below in conjunction with the accompanying drawings and specific embodiments, so that those skilled in the art may better understand the disclosure and implement it; however, the listed embodiments do not limit the disclosure.

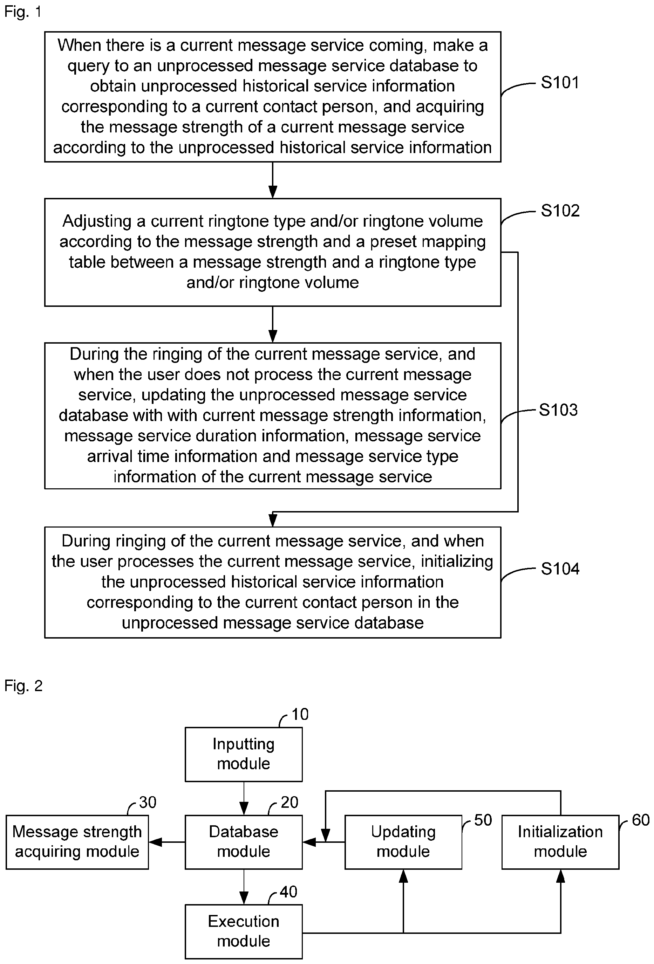

As shown in Fig. 1, an embodiment of the disclosure provides a message-intensity-based ringing method, including the following specific steps:

S101: when there is a current message service coming, making a query to an unprocessed message service database to get unprocessed historical service information corresponding to a current contact person, and acquiring a message intensity of the current message service according to the unprocessed historical service information;

S102: adjusting a current ringtone type and/or ringtone volume according to the message intensity and a preset mapping table between a message intensity and a ringtone type and/or ringtone volume.

In S101, the unprocessed historical service information includes message service type information, message service arrival time information, message service duration information and initialized message intensity information. The initialized message intensity information may be set according to the setting defined by user. When the user does not set by himself or herself, a minimal message intensity level, for example 1, is a default initialized message intensity.

In S101, the method for acquiring the message intensity of the current message service according to the unprocessed historical service information is acquiring the message intensity of the current message service according to the number of service messages within a given time, the message service duration, a time interval of recent three message services, and the initialized message intensity information. Within a given period of time, if a certain message service comes from a corresponding contact person frequently, and the message service duration time is relatively longer, then level of the message intensity is considered to be higher, at this time, the message intensity needs to be computed to provide a basis for subsequent adjustment of the ringtone type and/or ringtone volume.

In S102, the ringtone types and ringtone volume corresponding to different message intensitys are saved in the mapping table between a message intensity and a ringtone type and/or ringtone volume. This table is adapted to all the contact persons.

In a preferred embodiment, during the ringing of the current message service, when a user does not process the current message service, the method further includes:
S103: updating the unprocessed message service database with the message service type information, message service arrival time information, message service duration information and the current message intensity information of the current message service.

In this step, it should be understood that the way of storing the current message intensity information into the unprocessed message service database may be that covering the initialized message intensity information set initially, or storing the current message intensity information independently in the unprocessed message service database to provide a basis for computation of the message intensity when the next message service comes in. It should be noted that, in the embodiment of the disclosure, the computation of the message intensity may be based on the initialized message intensity information set initially, or may also be based on the last message intensity which is stored into the unprocessed message service database in real time.

In a preferred embodiment, during the ringing of the current message service, when a user processes the current message service, the method further includes:

S104: initiating the unprocessed historical service information corresponding to the current contact in the unprocessed message service database.

In this step, when the user processes the message service, for example, checks a short message, multimedia message or Email, or answers a call or dials a call back, the system considers that the unprocessed historical service information stored in the unprocessed message service database cannot be used to determine the message service relevant to the current contact person. At this time, the unprocessed message service database is needed to be initialized. During initialization, the initialized message intensity information may be set as a default value, or set by the user himself or herself.

In an embodiment of the disclosure, a critical condition is how to compute the message intensity. The computation of the message intensity may be implemented by an algorithm defined by the user. A default method for computing the message intensity is given below.

Firstly, assume that the ringtone volume supported by a mobile terminal, for example a mobile phone, is from 1 to N, the N of most phone mobiles is 10 currently. Here, the maximum message intensity is set as M*N; if the message intensity computed exceeds M*N, the corresponding message intensity is still considered to be M*N, wherein M is the type of the ringtone.

That is to say, for the calls from the same user, M types of ringtone may be supported to the maximum to be switched. The volume of each type of ringtone may be changed from 1 to N.

After the above assumptions are obtained, the computation of the message intensity will be described below by taking the phone service as an example.

1. Compute the initial message intensity of the corresponding contact person

In the unprocessed message service database, there are always two types for some message service for each contact, which are respectively initial ringtone type and initial ringtone volume. They are the initial message intensity of the message service. The default values of the two data are 1; if the values are not 1, the values are considered as the reference of initial data bit. Specifically, assume that the level of the initial call ringtone type of some contact person is 2, and the level of the call ringtone volume is 2, then the initialized message intensity possessed by the contact person is 2*N+2.

2. Compute instant message intensity

The instant message intensity means that the message intensity is computed based on the times of calling from the contact person, the duration of each call, and the sum of time intervals among the recent three calls saved in the database.

Assume that three calls from the contact person are stored in the unprocessed message service database, and assume that the time during which the corresponding ringtone is completely played is two minutes, the durations of the three calls are respectively 1 minute, 0.5 minute and 2 minute, and the time intervals for the last three calls are respectively 1 minute and 2 minutes. The instant message intensity is computed by taking the above data as an example.

The default algorithm designed in the disclosure is that if the number of the messages is increased by one, then the intensity of ringtone volume is increased by one. If the average duration of the message exceeds half of the total ringtone time, then the intensity of ringtone volume is increased by two. If the average time interval among the last three messages is lower than 5 minutes, then the intensity of the corresponding ringtone type is increased by one. As a result, the intensity of the current instant message computed by this algorithm, i.e., the intensity of the phone service, is 3+2+1*N.

3. Compute the last message intensity

The result obtained by adding the initial message intensity and the instant message intensity is the last message intensity. Sometimes, the intensity may be finely tuned. For the example, the intensity of this message is:

$$2*N+2+3+2+1*N=3*N+7.$$

Here, the data may be finely tuned. Specifically, if the mantissa is greater than N, assuming that the last message intensity computed is 3*N+N+6, then it should be 4*N+6.

If the data obtained finally is greater than M*N, then the message intensity to be processed should be M*N.

Writing the message intensity in a form of a*N+b means that the ringtone of the a-th type should be adopted and the ringtone volume is b.

Additionally, the unprocessed message service database provided by the embodiment of the disclosure may be designed in many ways. A design of the database provided herein is as follows:

the database includes two tables, one table is a historical service information record table, in which information relevant to each contact person is recorded, including: the message service type, for example call, short message, Email or the like, the message service arrival time, the message service duration, the initial message ringtone type and ringtone volume of contact persons; wherein the message service duration is mainly for a message service such as a call;

the other table is a mapping table between a message intensity and a ringtone type and/or ringtone volume, in which the ringtone type and the ringtone volume corresponding to different message intensitys are stored. This table is adapted to all the contact persons.

As shown in Fig. 2, an embodiment of the disclosure also provides a message-intensity-based ringing device, mainly including:

an inputting module 10, configured to, during there is a message service coming, make a query to an unprocessed message service database to get unprocessed historical service information corresponding to a current contact person;

preferably, the unprocessed historical service information includes message service type information, message service arrival time information, message service duration information and initialized message intensity information.

Additionally, the inputting module 10 may also be configured for a user to set the initialized message intensity information, query, delete and mark other unprocessed historical service information, and do other input operations.

A database module 20 is configured to store the unprocessed message service database, wherein the unprocessed message service database records contact information, and the unprocessed historical service information corresponding to the contact information, and the database module 20 is also configured to store a preset mapping table between a message intensity and a ringtone type and/or ringtone volume.

A message intensity acquiring module 30 is configured to acquire the message intensity of a current message service according to the obtained unprocessed historical service information through query.

An execution module 40 is configured to adjust a current ringtone type and/or ringtone volume according to the message intensity and a preset mapping table between a message intensity and a ringtone type and/or ringtone volume.

The method for acquiring the message intensity of the current message service by the message intensity acquiring module 30 according to the unprocessed historical service information is acquiring the message intensity of the current message service according to the number of the service messages within a given period, the message service duration, time intervals of recent three message services, and the initialized message intensity information.

In the preferred embodiment, during a process that the execution module 40 executes the ringing of the current message service, when a user does not process the current message service, the device further includes: an updating module 50, configured to update the unprocessed message service database with the message service type information, the message service arrival time information, the message service duration information and the current message intensity information of the current message service.

In a preferred embodiment, during a process that the execution module 40 executes ringing of the current message service, when a user processes the current message service, the device further includes:
an initialization module 60, configured to initialize the unprocessed historical service information corresponding to the current contact person in the unprocessed message service database.

Correspondingly, an embodiment of the disclosure also provides a mobile terminal, including the above message-intensity-based ringing device, wherein the device includes:

an inputting module 10, configured to, when there is a message service coming, make a query to an unprocessed message service database to get unprocessed historical service information corresponding to a current contact person;

a database module 20, configured to store the unprocessed message service database, wherein the unprocessed message service database records contact information, and the unprocessed historical service information corresponding to the contact information, and further configured to store a preset mapping table between a message intensity and a ringtone type and/or ringtone volume;

a message intensity acquiring module 30, configured to acquire the message intensity of a current message service according to the unprocessed historical service information obtained through query; and

an execution module 40, configured to adjust a current ringtone type and/or ringtone volume according to the message intensity and a preset mapping table between a message intensity and a ringtone type and/or ringtone volume.

The embodiments of the disclosure propose a mobile terminal, which may ring according to the message intensity, that is, the mobile terminal may consider the number of message service within a certain time, and time intervals among recent message services or the like to obtain data, i.e., the message intensity. Higher message intensity means that the corresponding contact person wants to contact the user more eagerly.

The message service here includes voice call, video call, short message, multimedia message, Email or the like. For the computation of the message intensity, the message services may be processed uniformly, that is, all the message services from the same person are uniformly considered as all elements of message intensity computation at a time, or the message intensity of each message service may also be computed independently.

After the message intensity of the current message service is computed, the corresponding ringtone type and ringtone volume may be obtained. The ringtone type is equivalent to coarse tuning of the message intensity, and the ringtone volume is equivalent to fine tuning of the message intensity. The above two ways are combined together to differentiate the intensity of each message reasonably, which enables the user to acquire the current message intensity only according to the ringtone type and ringtone volume, and to adopt corresponding measures to do better processing.

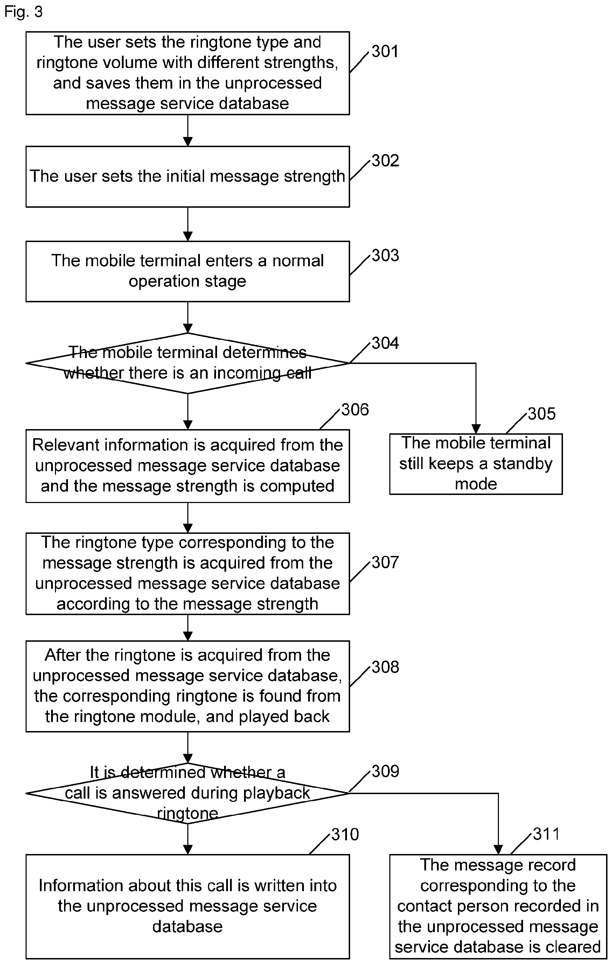

For the convenience of description, assuming that the message intensitys corresponding to the messages of different types are computed independently. For the convenience of description, the message type here takes a call as an example. The message-intensity-based ringing process of the mobile terminal provided by the embodiment of the disclosure will be described in conjunction with the flowchart, as shown in Fig. 3, including the following steps:

301: a user sets the ringtone type and ringtone volume with different intensitys, and saves them in the unprocessed message service database, so as to directly acquire the corresponding ringtone for playback after obtaining the message intensity throught subsequent computation;

302: the user sets the initial message intensity, which includes the ringtone type and the ringtone volume; here, the user may set the ringtone type and ringtone volume at the time of initial setting; if the user does not make an initial setting, it indicates that the initial message intensity is a minimum value; the user may also improve the level of the message of the contact person when some contact persons are specially treated according to the user's need;

303: the mobile terminal enters a normal operation stage, which is a normal state of the mobile terminal;

304: the mobile terminal determines whether there is an incoming call, if there is an incoming call, 306 is then executed, otherwise 305 is then executed;

305: if there is no incoming call, the mobile terminal still keeps a standby mode;

306: if there is an incoming call, relevant information is acquired from the unprocessed message service database and the message intensity of this time is computed;

307: the ringtone type corresponding to the message intensity is acquired from the unprocessed message service database according to the computed message intensity;
here, it is necessary to read the following information from the unprocessed message service database: the number of calls, the duration of each call, the time of each call, and the initial message intensity or the like;

308: after the ringtone is acquired from the unprocessed message service database, the corresponding ringtone is found from the ringtone module, and played back;

309: it is determined whether a call is answered during playback of ringtone, if not answered, 310 is then executed, otherwise 311 is then executed;

310: if the ringtone has been completely played, but the user does not answer the call, information about this call is written into the unprocessed message service database, the written data including the starting time of this call, and duration or the like; and

311: if the user answers the call, the message record corresponding to the contact person recorded in the unprocessed message service database is cleared.

Further, when the mobile terminal operates normally, the user may reset the message intensity of different contact persons at any time. For example the user wants to improve the message intensity of some contact persons artificially to give more attention to the ringtone from the contact persons. Or, after some message information of some contact person has been recorded in the unprocessed message service database, the message intensity has been improved to a higher level, the user wishes to reduce the message intensity of the contact person, so that the message intensity of the contact may be reset.

Resetting the message intensity of the contact person will result in modifying the information corresponding to the contact person in the unprocessed message service database. Specifically, the initial message intensity is reset and the message record corresponding to the contact person recorded in the unprocessed message service database is cleared.

Further, when the mobile terminal operates normally, and when the user finds the missed call from some contact persons, the user may dial the call back. If the user dials the call back, all the message records corresponding to the user in the unprocessed message service database will be all deleted.

The above are only the preferred embodiments of the disclosure and do not limit the patent scope of the disclosure. Any equivalent structure or equivalent flow modification according to the contents of the specification and accompanying drawings in the disclosure, no matter whether they are directly or indirectly used in any other related technical field, should be included within the scope of protection of the claims of the disclosure.

**Claims**

1.  A message-intensity-based ringing method, comprising:

    when there is a current message service coming, making a query to an user-unprocessed message service database to obtain user-unprocessed historical service information corresponding to a current contact person from whom the current message service comes, and calculating a message intensity of the current message service according to the user-unprocessed historical service information (S101); and **characterized in that**,
    adjusting a current ringtone type and ringtone volume according to the message intensity and a preset mapping table between a message intensity and a ringtone type and ringtone volume (S102);
    wherein the user-unprocessed historical service information comprises message service type information, message service arrival time information, message service duration information and initialized message intensity information;
    wherein calculating the message intensity of the current message service according to the user-unprocessed historical service information comprises: calculating the message intensity of the current message service according to the number of service messages within a given time, message service duration, time intervals among recent three message services, and the initialized message intensity information.

2.  The message-intensity-based ringing method according to claim 1, during ringing of the current message service, and when a user does not process the current message service, the method further comprising:

    updating the user-unprocessed message service database with current message intensity information, message service duration information, message service arrival time information and message service type information of the current message service(S103).

3.  The message-intensity-based ringing method according to claim 2, during the ringing of the current message service, and when the user processes the current message service, the method further comprising:

    initializing the user-unprocessed historical service information corresponding to the current contact person in the user-unprocessed message service database (S104).

4.  A message-intensity-based ringing device, comprising:

    an inputting module(10), configured to, when there is a current message service coming, make a query to an user-unprocessed message service database to obtain user-unprocessed historical service information corresponding to a current contact person from whom the current message service comes;
    **characterized in that**,
    a database module(20), configured to store the user-unprocessed message service database, the user-unprocessed message service database recording contact information, and user-unprocessed historical service information corresponding to the contact information, and the data module also configured to store a preset mapping table between a message intensity and a ringtone type and ringtone volume;
    a message intensity acquiring module(30), configured to calculate a message intensity of the current message service according to the user-unprocessed historical service information obtained through the query; and
    an execution module(40), configured to adjust a current ringtone type and ringtone volume according to the message intensity and the preset mapping table between a message intensity and a ringtone type and ringtone volume;
    wherein the user-unprocessed historical service information comprises message service type information, message service arrival time information, message service duration information and initialized message intensity information;
    wherein the message intensity acquiring module (30) configured to calculate the message intensity of the current message service according to the user-unprocessed historical service information is further configured to calculate the message intensity of the current message service according to the number of service messages within a given period, message service duration, time intervals among recent three message services, and the initialized message intensity information.

5. The message-intensity-based ringing device according to claim 4, during a process that the execution module executes ringing of the current message service, and when a user does not process the current message service, the device further comprising:

an updating module(50), configured to update the user-unprocessed message service database with current message intensity information, message service duration information, message service arrival time information and message service type information of the current message service.

6. The message-intensity-based ringing device according to claim 4, during a process that the execution module executes the ringing of the current message service, and when the user processes the current message service, the device further comprising:

an initialization module(60), configured to initialize the user-unprocessed historical service information corresponding to the current contact person in the unprocessed message service database.

7. A mobile terminal, comprising a message-intensity-based ringing device according to any one of claims 4 to 6.

**Patentansprüche**

1. Auf Nachrichtenstärke basierendes Ruftonverfahren, folgendes umfassend:

beim Eingehen eines aktuellen Nachrichtendienstes Erstellen einer Anfrage an eine Datenbank für vom Nutzer nicht bearbeitete Nachrichtendienste, um Informationen zu vom Nutzer nicht bearbeiteten vorherigen Diensten zu erzielen, die einer aktuellen Kontaktperson entsprechen, von welcher der aktuelle Nachrichtendienst eingeht, und Berechnen einer Nachrichtenstärke des aktuellen Nachrichtendienstes gemäß den Informationen zu vom Nutzer nicht bearbeiteten früheren Diensten (SW101), und durch Folgendes gekennzeichnet:

Justieren einer aktuellen Ruftonart und eines aktuellen Ruftonvolumens gemäß der Nachrichtenstärke und einer voreingestellten Abbildungstabelle zwischen einer Nachrichtenstärke und einer Ruftonart und einem Ruftonvolumen (S102), wobei die Informationen zu vom Nutzer nicht bearbeiteten vorherigen Diensten Informationen zu Nachrichtendienststart, Nachrichtendienst-Eingangszeit, Nachrichtendienstdauer und Stärke der initialisierten Nachricht umfassen, wobei das Berechnen der Nachrichtenstärke des aktuellen Nachrichtendienstes gemäß den Informationen zu vom Nutzer nicht bearbeiteten vorherigen Diensten Folgendes umfasst: Berechnen der Nachrichtenstärke des aktuellen Nachrichtendienstes gemäß der Anzahl an Dienstnachrichten innerhalb einer gegebenen Zeitspanne, der Nachrichtendienstdauer, der Zeitintervalle zwischen letzten drei Nachrichtendiensten und den Informationen zur Stärke der initialisierten Nachricht.

2. Auf Nachrichtenstärke basierendes Ruftonverfahren nach Anspruch 1, wobei das Verfahren während des Rufens des aktuellen Nachrichtendienstes und wenn ein Benutzer den aktuellen Nachrichtendienst nicht bearbeitet, ferner Folgendes umfasst:

Aktualisieren der Datenbank für vom Nutzer nicht bearbeitete Nachrichtendienste mit Informationen zur aktuellen Nachrichtenstärke, zu Nachrichtendienstdauer, Nachrichtendienst-Eingangszeit und Nachrichtendienststart des aktuellen Nachrichtendienstes (S103).

3. Auf Nachrichtenstärke basierendes Ruftonverfahren nach Anspruch 2, wobei das Verfahren während des Rufens des aktuellen Nachrichtendienstes und wenn ein Benutzer den aktuellen Nachrichtendienst bearbeitet, ferner Folgendes umfasst:

Initialisieren der Informationen zu vom Nutzer nicht bearbeiteten vorherigen Diensten entsprechend der aktuellen Kontaktperson in der Datenbank für vom Nutzer nicht bearbeitete Nachrichtendienste (S104).

4. Auf Nachrichtenstärke basierende Ruftonvorrichtung, Folgendes umfassend:

ein Eingabemodul (10), das dafür konfiguriert ist, beim Eingehen eines aktuellen Nachrichtendienstes eine Anfrage an eine Datenbank für vom Nutzer nicht bearbeitete Nachrichtendienste zu erstellen, um Informationen zu vom Nutzer nicht bearbeiteten vorherigen Diensten zu erhalten, die einer aktuellen Kontaktperson entsprechen, von welcher der aktuelle Nachrichtendienst eingeht, durch Folgendes gekennzeichnet:

ein Datenbankmodul (20), das dafür konfiguriert ist, die Datenbank für vom Nutzer nicht bearbeitete Nachrichtendienste, die Aufzeichnungskontaktinformationen der Datenbank für vom Nutzer nicht bearbeitete Nachrichtendienste und Informationen zu vom Nutzer nicht bearbeiteten vorherigen Diensten entsprechend den Kontaktinformationen zu speichern, und das Datenmodul außerdem dafür konfiguriert ist, eine voreingestellte Abbildungstabelle zwischen einer Nachrichtenstärke und einer Ruftonart und einem Ruftonvolumen zu speichern, ein Nachrichtenstärke-Erfassungsmodul (30), das dafür konfiguriert ist, eine Nachrichtenstärke des aktuellen Nachrichtendienstes gemäß den Informationen zu vom Nutzer nicht bearbeiteten vorherigen Diensten, die durch die Anfrage erzielt wurden, zu berechnen, und

ein Ausführungsmodul (40), das dafür konfiguriert ist, eine aktuelle Ruftonart und ein aktuelles Ruftonvolumen gemäß der Nachrichtenstärke und der voreingestellten Abbildungstabelle zwischen einer Nachrichtenstärke und einer Ruftonart und einem Ruftonvolumen zu justieren,

wobei die Informationen zu vom Nutzer nicht bearbeiteten vorherigen Diensten Informationen zu Nachrichtendienststart, Nachrichtendienst-Eingangszeit, Nachrichtendienstdauer und Stärke der initialisierten Nachricht umfassen,

wobei das Nachrichtenstärke-Erfassungsmodul (30), das dafür konfiguriert ist, die Nachrichtenstärke des aktuellen Nachrichtendienstes gemäß den Informationen zu vom Nutzer nicht bearbeiteten vorherigen Diensten zu berechnen, ferner dafür konfiguriert ist, die Nachrichtenstärke des aktuellen Nachrichtendienstes gemäß der Anzahl von Dienstnachrichten innerhalb einer gegebenen Zeitspanne, Nachrichtendienstdauer, Intervallen der letzten drei Nachrichtendienste und den Informationen zur Stärke der initialisierten Nachricht zu berechnen.

5. Auf Nachrichtenstärke basierende Ruftonvorrichtung nach Anspruch 4, wobei die Vorrichtung während eines Prozesses, in dem das Ausführungsmodul das Rufen des aktuellen Nachrichtendienstes ausführt und wenn ein Benutzer den aktuellen Nachrichtendienst nicht bearbeitet, ferner Folgendes umfasst:

ein Aktualisierungsmodul (50), das dafür konfiguriert ist, die Datenbank für vom Nutzer nicht bearbeitete Nachrichtendienste mit Informationen zur aktuellen Nachrichtenstärke, zu Nachrichtendienstdauer, Nachrichtendienst-Eingangszeit und Nachrichtendienstart des aktuellen Nachrichtendienstes zu aktualisieren.

6. Auf Nachrichtenstärke basierende Ruftonvorrichtung nach Anspruch 4, wobei die Vorrichtung während eines Prozesses, in dem das Ausführungsmodul das Rufen des aktuellen Nachrichtendienstes ausführt und wenn ein Benutzer den aktuellen Nachrichtendienst bearbeitet, ferner Folgendes umfasst:

ein Initialisierungsmodul (60), das dafür konfiguriert ist, die Informationen zu vom Nutzer nicht bearbeiteten vorherigen Diensten entsprechend der aktuellen Kontaktperson in der Datenbank für nicht bearbeitete Nachrichtendienste zu initialisieren.

7. Mobiles Endgerät, eine auf Nachrichtenstärke basierende Ruftonvorrichtung nach einem der Ansprüche 4 bis 6 umfassend.

## Revendications

1. Procédé de sonnerie basée sur l'intensité d'un message, comprenant :

lorsqu'un service de message courant arrive, la réalisation d'une demande à une base de données de services de messages non traités par l'utilisateur afin d'obtenir des informations de service historique non traitées par l'utilisateur correspondant à une personne de contact courante d'où provient le service de message courant et le calcul d'une intensité de message du service de message courant selon les informations de service historique non traitées par l'utilisateur (S101) ; et

**caractérisé en ce que**

l'ajustement d'un type de sonnerie et d'un volume de sonnerie courants selon l'intensité du message et d'une table de mappage entre une intensité de message et un type de sonnerie et un volume de sonnerie (S102) ;

les informations de service historique non traitées par l'utilisateur comprenant une infirmation de type service de message, une information d'heure d'arrivée du service de message, une information de durée du service de message et une information d'intensité de message initialisée ;

le calcul de l'intensité de message du service de message courant selon les informations de service historique non traitées par l'utilisateur comprenant : le calcul de l'intensité de message du service de message courant selon le nombre de messages de service dans un temps donné, la durée du service de message, les intervalles de temps entre trois services de messages récents et l'information d'intensité de message initialisée.

2. Procédé de sonnerie basée sur l'intensité d'un message selon la revendication 1, pendant la sonnerie du service de message courant et lorsqu'un utilisateur ne traite pas le service de message courant, le procédé comprenant en outre :

la mise à jour de la base de données de services de messages non traités par l'utilisateur avec une information d'intensité de service de message courant, une information de durée de service de message, une information d'heure d'arrivée du service de message et une information de type du service de message du service de message courant (S103).

3. Procédé de sonnerie basée sur l'intensité d'un message selon la revendication 2, pendant la sonnerie du service de message courant et lorsqu'un utilisateur traite le service de message courant, le procédé comprenant en outre :

l'initialisation des informations de service historique non traitées par l'utilisateur correspondant à la personne de contact courante dans la base de données de services de messages non traités par l'utilisateur (S104).

4. Dispositif de sonnerie basée sur l'intensité d'un message, comprenant :

un module d'entrée (10), conçu, lorsqu'un service de message arrive, pour faire une requête à une base de données de services de messages non traités par l'utilisateur pour obtenir des informations de service de message historique non traitées par l'utilisateur correspondant à une personne de contact courant d'où provient le service de message courant ;
**caractérisé en ce que**
un module de base de données (20), conçu pour stocker la base de données de services de messages non traités par l'utilisateur, la base de données de services de messages non traités par l'utilisateur enregistrant des informations de contact et des informations de service historique non traitées par l'utilisateur correspondant aux informations de contact et le module de données est également conçu pour stocker une table de mappage prédéterminée entre l'intensité d'un message et un type de sonnerie et un volume de sonnerie ;

un module d'acquisition d'intensité de message (30), conçu pour calculer l'intensité d'un message du service de message courant selon les informations de service historique non traité par l'utilisateur, obtenues par l'intermédiaire de la requête ; et
un module d'exécution (40), conçu pour ajuster un type de sonnerie et un volume de sonnerie courants selon l'intensité du message et la table de mappage prédéterminée entre l'intensité d'un message et type de sonnerie et un volume de sonnerie ;
les informations de service historique non traitées par l'utilisateur comprenant une information de type de service de message, une information d'heure d'arrivée du service de message, une information de durée de service de message et une information d'intensité de message initialisée ;
le module d'acquisition d'intensité de message (30) conçu pour calculer l'intensité de message du service de message courant selon les informations de service historique non traitées par l'utilisateur étant en outre conçu pour calculer l'intensité de message du service de message courant selon le nombre de services de messages dans une période données, la durée du service de message, les intervalles de temps entre trois services de messages récents et l'information d'intensité de message initialisée.

5. Dispositif de sonnerie basée sur l'intensité d'un message selon la revendication 4, pendant un processus que le module d'exécution exécute la sonnerie du service de message courant et lorsqu'un utilisateur ne traite pas le service de message courant, le dispositif comprenant en outre :

un module de mise à jour (50), conçu pour mettre à jour la base de données de services de messages non traités par l'utilisateur avec une information d'intensité de message courant, une information de durée de service de message, une information d'heure d'arrivée du service de message et une information de type de service de message du service de message courant.

6. Dispositif de sonnerie basée sur l'intensité d'un message selon la revendication 4, pendant un processus que le module d'exécution exécute la sonnerie du service de message courant et lorsque l'utilisateur traite le service de message courant, ce dispositif comprenant en outre :

un module d'initialisation (60), conçu pour initialiser les informations de service historique non traitées par l'utilisateur correspondant à la personne de contact courante dans la base de données de services de messages non traités.

7. Terminal mobile comprenant un dispositif de sonnerie basée sur l'intensité d'un message selon l'une des revendications 4 à 6.

Fig. 1

When there is a current message service coming, make a query to an unprocessed message service database to obtain unprocessed historical service information corresponding to a current contact person, and acquiring the message strength of a current message service according to the unprocessed historical service information — S101

Adjusting a current ringtone type and/or ringtone volume according to the message strength and a preset mapping table between a message strength and a ringtone type and/or ringtone volume — S102

During the ringing of the current message service, and when the user does not process the current message service, updating the unprocessed message service database with with current message strength information, message service duration information, message service arrival time information and message service type information of the current message service — S103

During ringing of the current message service, and when the user processes the current message service, initializing the unprocessed historical service information corresponding to the current contact person in the unprocessed message service database — S104

Fig. 2

Inputting module 10

Message strength acquiring module 30

Database module 20

Execution module 40

Updating module 50

Initialization module 60

Fig. 3

The user sets the ringtone type and ringtone volume with different strengths, and saves them in the unprocessed message service database `/301`

The user sets the initial message strength `/302`

The mobile terminal enters a normal operation stage `/303`

The mobile terminal determines whether there is an incoming call `/304`

Relevant information is acquired from the unprocessed message service database and the message strength is computed `/306`

The mobile terminal still keeps a standby mode `/305`

The ringtone type corresponding to the message strength is acquired from the unprocessed message service database according to the message strength `/307`

After the ringtone is acquired from the unprocessed message service database, the corresponding ringtone is found from the ringtone module, and played back `/308`

It is determined whether a call is answered during playback ringtone `/309`

Information about this call is written into the unprocessed message service database `/310`

The message record corresponding to the contact person recorded in the unprocessed message service database is cleared `/311`

## REFERENCES CITED IN THE DESCRIPTION

**Patent documents cited in the description**

- US 2009002127 A
- CN 1613028
- EP 1613028 A
- US 20090312067 A
- KR 20070100984
- US 2004242284 A